# EUROPEAN PATENT APPLICATION

(11) **EP 2 070 639 A1**
(43) Date of publication of application: **17.06.2009**
(21) Application number: 07123066.8
(22) Date of filing: 12.12.2007
(51) Int. Cl.: B23K 37/02, B23K 11/30

(54) **Welding tool and welding apparatus**

(71) Applicant: CATERPILLAR INC., Peoria IL 61629-6490 (US)
(72) Inventor: Danilo, Beltramini, 6010 Couillet (BE)
(74) Representative: Hatzmann, Martin

(57) **Abstract**

The disclosure discloses a welding tool (4), comprising a retainer (9) and a conductor (39) connected to the retainer. The retainer comprises a magnet (36) for retaining an object to be welded. The disclosure further discloses a method for welding, comprising the steps of retaining to a magnet of a welding tool an element to be welded to a surface, bringing the element to be welded into contact with the surface with at least a primary contact area and directing an electrical current through the element and the surface, passing through at least the primary contact area. Then at least a portion of at least one of the primary contact area and the surface is melted and at least the primary contact area is forced against.

## Description

### Technical Field

The present disclosure relates to a welding tool and, more particularly, to an electrical welding tool having a magnet.

### Background

Resistance welding is a method of welding commonly used for welding objects to for example a metal surface. Examples of resistance welding are spot welding and seam welding. In such welding methods for example the objects to be welded together can be held by an operator and manually placed between two electrodes, which can then be mechanically forced from opposite sides against the objects. Then an electrical current is sent through the electrodes, thereby heating up the contact surfaces of the objects and melting them together.

For welding together products made of for example thicker materials, which can not be spot welded, the objects to be welded can be placed upon each other, wherein for example one of the objects is connected to an earth link and the other is held by a gripper, which is electrically connected to an energy source. The gripper is then moved, such that the objects are forced together, leading to melting of a contact area of the two objects, which thus melt together. These methods can for example be used for heavier products or for temporarily attaching an object to a surface, later to be welded properly by another welding method.

In many processes it is desirable to automate welding processes, including picking up and retaining objects to be welded while manipulating and welding these objects to a surface. To this end for example grippers can be used in welding tools, which grippers can be pneumatically or hydraulically operated, whereas the tools can be attached to a robot for movement of the gripper with an object to be welded relative to the surface. Such grippers can be complicated structures, which need to be operated carefully. Moreover, since grippers have to pinch an object to be able to pick it up and hold it, the gripper needs to make direct contact with at least two opposite sides of a part of that object. This means that the gripper can hamper proper positioning of the object relative to the surface. Moreover, the gripper can come into contact with the surface, which could result in the gripper being welded to the surface, next to or instead of the object. This will also result in improper welding of the object to the surface.

Japanese Patent Application JP2003320461 discloses a spot welding apparatus comprising a body and two arms. A first arm is stationary relative to the body whereas a second arm is movable relative to the fixed arm and the body. Each arm carries an electrode. The electrodes are facing each other, and can be brought together for spot welding two sheets of metal held there between. A third, flexible arm is connected to the body with a first end, whereas the second end of the flexible arm is provided with a magnetic body having a centering pin. The objects to be welded are provided with a centering hole, for receiving the centering pin. The magnetic body can be manually moved by an operator, by deforming the arm, while spot welding the objects. Although this tool can aid an operator in holding objects to be welded, the tool is limited in its applicability. The objects to be welded can only be small and need to be made of thin sheet metal, in order for spot welding to be applicable. Moreover, the positioning of the objects is still dependent on the positioning thereof by the operator. Therefore this tool will not be suitable for automated welding processes, especially not for relatively heavy objects, objects made of relatively thick material, and unsuitable for spot welding.

The present disclosure is directed to providing a welding tool suitable for resistance welding, addressing at least one of the problems set out above or providing an alternative solution.

### Summary of the Invention

In a first aspect the present disclosure is directed to a welding tool comprising a retainer and a conductor. The conductor is connected to the retainer. The retainer comprises a magnet for retaining an object to be welded.

In another aspect the present disclosure is directed to a method for welding, comprising the steps of retaining to a magnet of a welding tool an element to be welded to a surface and bringing the element to be welded into contact with the surface with at least a primary contact area. The method further comprises the steps of directing an electrical current through the element and the surface, passing through at least the primary contact area, and melting at least one of at least a portion of the primary contact area and the surface. The method then comprises the step of forcing at least the primary contact area against the surface, for joining them together, after which the magnet is withdrawn from the element.

In a further aspect the present disclosure is directed to a welding apparatus comprising a robot and a welding tool. The welding tool comprises a body, connected to the robot and a holding device. The holding device is provided with a magnet.

In a still further aspect the present disclosure is directed to a welding tool, comprising a conductor and a retainer. The retainer is provided with a contact surface for retaining an object to be welded and a retainer body near the contact surface. The retainer body is at least partly made of a non-ferro and non-copper material.

### Brief Description of the Drawings

Fig. 1 in side view schematically a welding apparatus;

Fig. 2 in perspective view schematically a welding tool;

Fig. 3 in cross sectional side view along the line III - III in Fig. 2 a welding tool;

Fig. 4 in cross sectional side frontal view along the line IV - IV in fig. 3 a welding tool; and

Fig. 5 in side view a welding tool retaining an object, positioned against a surface to which it is being welded.

### Detailed Description

In the description the same or similar features or elements have the same or corresponding reference signs. The embodiments shown are only shown and discussed by way of examples and should not be construed as limiting the disclosure.

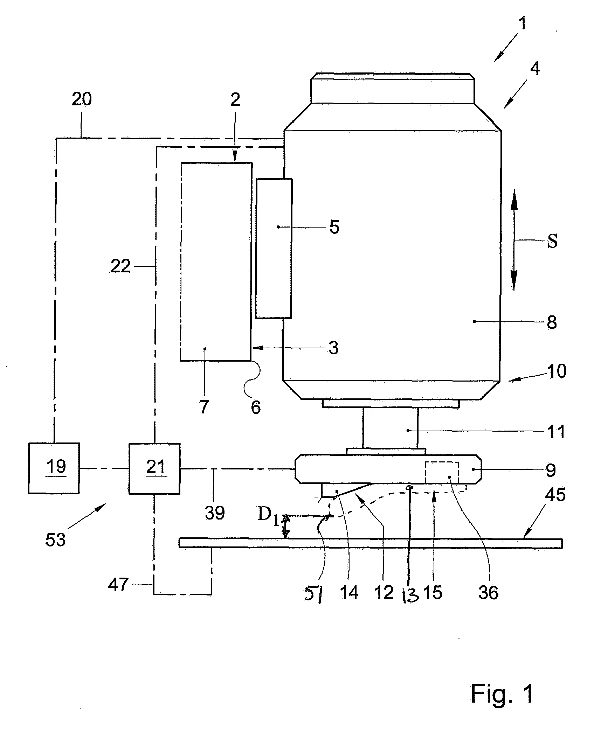

In fig. 1 a welding apparatus 1 is shown, comprising a robot 2 having a guide surface 3. A welding tool 4 is attached to the guiding surface 3 by a sliding shoe 5, such that the welding tool 4 can be moved in the directions between an upper position as shown in fig. 1 and a lower position wherein the guiding shoe 5 together with the welding tool 4 is positioned near a lower side 6 of a base body 7 of the robot 2. In this embodiment the shoe 5 and welding tool 4 are movable in a linear direction S between the upper and lower position, along the guide surface 3, for example electrically driven. In this embodiment the robot 2 allows at least one degree of freedom to the welding tool 4. In an alternative embodiment the robot can for example comprise a robotic arm (not shown) offering more than one degree of freedom, for example five or six degrees of freedom to the welding tool 4, such that it can be moved in for example three linear directions and three rotational directions relative to a fixed point in space. Such robots are commonly known. In a still further embodiment the welding tool 4 can be attached stationary to a frame, or can be handheld. In another embodiment the robot 2 can allow rotational movement of the welding tool 4.

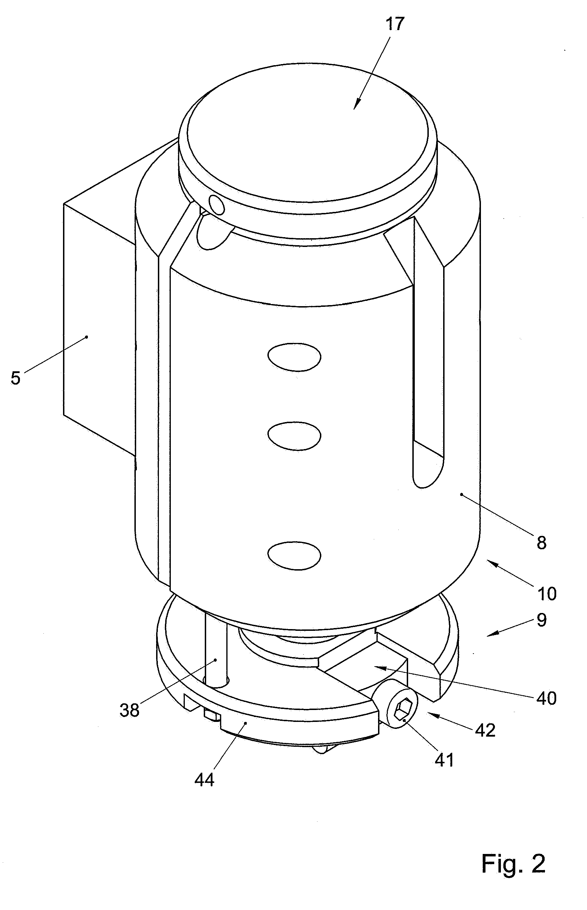

As is shown in for example Fig. 1 and further elucidated in Fig. 2 - 4, a welding tool 4 can comprise a body 8 that can be connected to the shoe 5. In an embodiment the body 8 has at least an outer surface made of plastic. In another embodiment the body may be made of metal. A retainer 9 can be provided at a first end 10 of the body 8, connected to a shaft 11. The retainer 9 can comprise a contact surface 12 against which an element or object 13 to be welded can be retained. The contact surface 12 can be at least partly electrically conductive. In the embodiment shown the contact surface 12 can at least partly be angled, comprising a first surface portion 14 and a second surface portion 15. In an embodiment the first and second surface portions 14, 15 can extend at an angle α relative to each other. In an embodiment the angle α can be between about 120 and 180 degrees. In a further embodiment the angle α can be between about 140 and 160 degrees. In other embodiments the angle α can be smaller or larger. The first surface portion can enclose an angle β with a longitudinal axis 16 of the shaft 11. The second surface portion 15 can enclose an angle γ with the axis 16. In an embodiment the angle β can be between about 90 and 180 degrees. In a further embodiment the angle β can be between about 90 and 130 degrees. The angle β can for example be about 120 degrees. In an embodiment the angle γ can be between about 90 and 180 degrees. In a further embodiment the angle γ can be between about 90 and 130 degrees. The angle γ can for example be about 120 degrees. In an embodiment the angle γ can be slightly smaller than the angle β, for example between 1 and 30 degrees smaller. In an embodiment the angle γ can be about between 1 and 20 degrees smaller than the angle β. The angles α, β and/or γ can be chosen depending on for example the object 13 to be retained. In an embodiment the contact surface 12 can be curved or hooked. In another embodiment the contact surface 12 can be irregularly shaped, such as curved in a single direction or in multiple directions. The contact surface 12 can in an embodiment extend at a side of the retainer 9 opposite the body 8.

In an embodiment the body 8 can be connected to a robot 2 having multiple degrees of freedom, for example three, four, five, six or more, such that the contact surface 12 can be positioned in multiple orientations relative to the base body 7, depending on the orientation into which the element 13 to be welded should be positioned for welding. Especially in such embodiments the retainer can be stationary or can at least be used stationary to the body 8.

In the body 8 an actuator 17 can be provided, connected to the shaft 11. In an embodiment the actuator 17 can be electrically powered. The actuator can for example comprise a solenoid 18, connected to a controller 19 by a suitable conductor 20 and connected to a power source 21 by a further suitable connector 22. The actuator can be powered by the controller, for moving the shaft 11 in longitudinal direction relative to the body 8, thereby moving the retainer 9 relative to the body 8 and/or to the base body 7 of the robot 2. The controller 19 and the actuator can be designed to allow positioning of the retainer 9 relative to the body 8 in any position within the range of movement allowed by the actuator 7 such that the retainer can be moved in a direction P relative to the body 8. In an embodiment this direction P can be longitudinal, parallel to the axis 16.

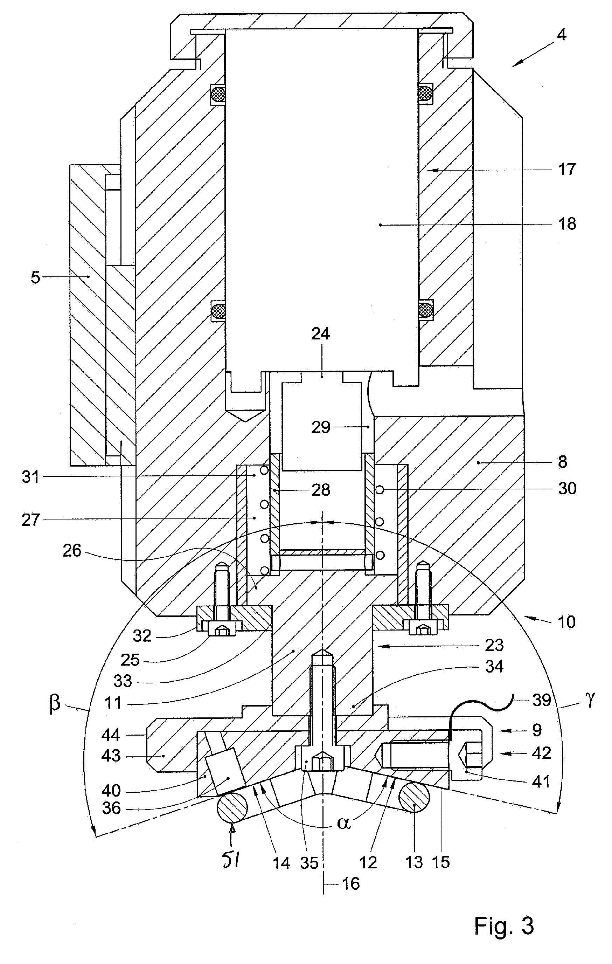

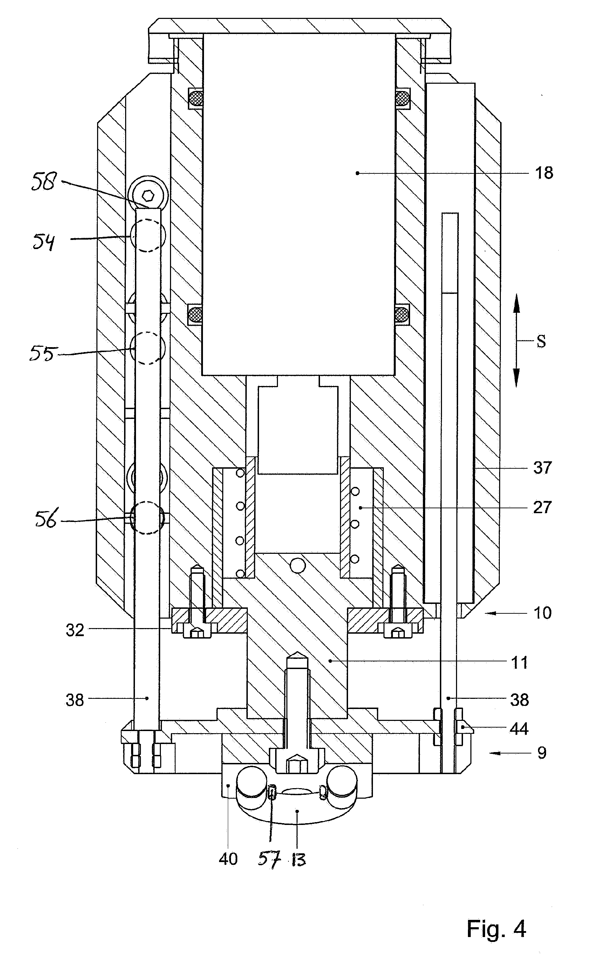

As is shown in Fig. 3 and 4, the shaft 11 can comprise a first part 23, connected to the retainer 9, and a second part 24, connected to or extending into the actuator 17 such as a solenoid 18. The first part 23 can be connected to the second part 24 by a bolt 25. The first part 23 comprises a shoulder 26 near the lower end 10 of the body 8. A chamber 27 is provided in the lower end 10 of the body 8. The shoulder 26 extends inside the chamber 27, carrying a bushing 28 at a side facing the actuator 17. An end of the bushing 28 facing away from the shoulder 26 extends sliding into a bore 29 opening into the chamber 27, extending between the chamber 27 and the actuator 17, around the second part 24 of the shaft 11. A coil spring 30 extends around the bushing 28, between the shoulder 26 and the end 31 of the chamber 27 opposite the shoulder 26. A closing plate 32 is attached against the end 10 of the body 8, closing off the chamber 27 and thereby retaining the shoulder 26 inside the chamber 27. The first part 23 of the shaft 11 extends through an opening 33 in the plate 32. The retainer 9 can be attached to an end 34 of the first part 23 of the shaft 11 by a bolt 35. In another embodiment the retainer can be attached to the shaft in another suitable way, for example but not limited to screw thread, press fit, welding, gluing or the like, or could be made integrally with the first part 23 of the shaft 11. In an embodiment the shaft 11 can be made of one piece or more pieces.

The retainer 9 can be provided with at least one magnet 36. In an embodiment there can be one magnet 36. In another embodiment there can be several magnets 36 in different positions in or near the contact surface 12. In an embodiment at least one permanent magnet 36 can be provided. In another embodiment there can be provided at least one electro magnet 36. Combinations of at least one permanent magnet and at least one electro magnet can be provided in or near the contact surface 12. The or each magnet can be provided such that it can retain an object or element 13 comprising or made of metal or another magnetic and/or magnetisable material against the first and/or second portions 14, 15 of the contact surface 12, such that the object or element 13 can be picked up and retained by the retainer 9 by at least magnetism. In an embodiment the retainer 9 is not provided with further retaining means such as a gripper. In an embodiment the magnets 36 can at least be provided in the second contact surface portion 15, such that electrical current is mainly led past the magnets 36. In an embodiment the magnets 36 can be provided at a distance from the contact surface 12 and can for example be covered by a layer of a non-metallic or non-magnetisable material, such as plastic. The retainer 9 can be provided with a number of positioning elements 57 for accurately positioning an object 13 on the retainer 9. In an embodiment the positioning elements 57 can comprise pins extending from the surface 12. In an example there can be three such elements 57, for example positioned in corners of an imaginary triangle.

As can be seen in Fig. 4, the body 8 can be provided with channels 37 which can extend substantially parallel to each other and to the longitudinal axis 16 of the shaft 11. In an embodiment there can be two such channels 37. From the retainer 9 a guide shaft 38 can extend into each of the channels 37, such that the shafts 38 are slidably movable in the direction S in the channels 37. The cooperating channels 37 and shafts 38 form guides for the longitudinal movement of the retainer 9 relative to the body 8. The shafts 38 can in an embodiment be bolted to the retainer 9.

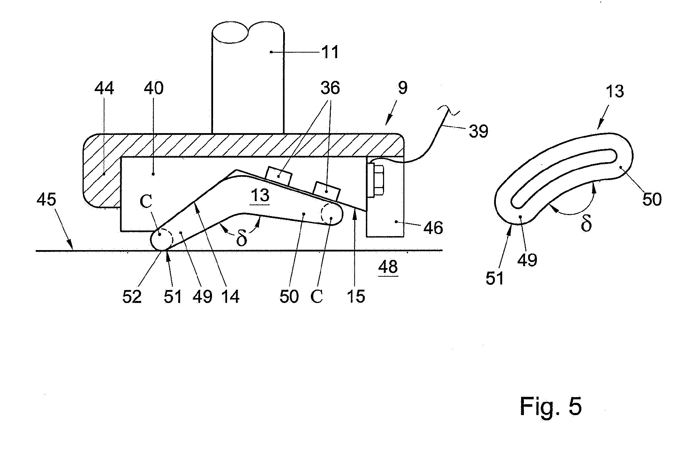

In an embodiment the retainer 9 can be connected to the power source 21 by an electrical conductor 39. In an embodiment the contact surface 12 can be provided on or as part of a metallic retainer element 40. The electrical conductor 39 can be connected to the retainer element 40 by a bolt 41 bolted into a side 42 of the retainer element 40. The electrical conductor 39 can be directly or indirectly connected to the power source 21. The power source 21 can in an embodiment comprise a generator, a bobbin or another high energy power source suitable for resistance or arc welding. In an embodiment the retainer 9 can comprise a retainer body 43, for example a body 43 extending at least partly around a retainer element 40 and/or the contact surface 12. In an embodiment the retainer body 43 can be made at least partly of a non-ferro and non-copper material. The retainer body can be made at least partly of a non-magnetic or non-magnetisable material. In an embodiment the retainer body 43 can at least partly be made of plastic or ceramics. In an embodiment the retainer body 43 can be made such that at least an outer surface 44 extending around the contact surface 12 is made of a non-ferro, non-copper, preferably non-metallic material. In an embodiment at least the outer surface 44 can be made of an electrical insulator, such as plastic of ceramics. This can prevent the retainer 9 from being welded to a surface 45 (Fig. 1 and 5) to which the element or object 13 is to be welded. Moreover this can prevent electrical contact between the retainer body 43 and/or retainer element 40 and the surface 45, other than through the element or object 13 to be welded to said surface 45, which prevents faulty or improper welding. In an embodiment the retainer element 40 and the retainer body 43 can be made integrally. In an embodiment the retaining body 45 can be provided with an extension 46 extending below the lowest point of the contact surface 12 or the retaining element 40. This extension 46 can thus prevent contact between the contact surface 12 and/or the retaining element 40 and the surface 45 when no element or object 13 is retained by the retainer 9, or is retained improperly. The surface 45 can be connected to the power source 21 by a conductor 47. In another embodiment the surface 45 can be connected to an earth link. The surface 45 can for example be the surface of a metal object such as but not limited to for example a plate, frame, beam, wire, sheet or other constructional element 48.

In Fig. 5 at the left hand side a retainer 9 is shown, partly in cross section, holding an element 13 against a surface 45 to which it is to be welded. The element 13 in this embodiment can be a link. In fig. 5 at the right hand side such link 13 is schematically shown in perspective view. The link 13 comprises a loop shaped metal part, having a substantially circular cross section C, as is shown in dotted outline. The link 13 can have a first portion 49 and a second portion 50, extending relative to each other at an angle δ. The angle δ can be substantially the same as the angle α, such that when the link 13 is retained against the contact surface, in a position as shown in Fig. 3 and 5, the first portion 49 can be held against the first contact surface portion 14 and the second portion 50 can be held against the second contact surface portion 15.

In an embodiment the retainer 9 and element 13 can be designed such that an element or object 13 to be welded, retained by or against the surface 12, has an extreme portion 51 extending such that upon movement of the retainer 9 in the direction P and/or S, towards the surface 45, this extreme portion 51 comes into contact with the surface 45 first or exclusively. This extreme portion 51 thus becomes or provides a contact point or primary contact area 52 between the element 13 and the surface 45. The electrical contact between element 13 and surface 45 will in such embodiment be at least substantially formed by said primary contact area 52. In the embodiment shown in fig. 5 the primary contact area 52, formed by the extreme end 51 of the first part 49, will be the only contact area between link 13 and surface 45, thereby providing an optimal electrical contact for welding.

The body 8 can be provided with a number of switches. In Fig. 4 three switches 54-56 are shown, by way of example. The switches 54-56 can be activateable by a shaft 38. In an embodiment the switches 54-56 can be contact switches. In another embodiment the switches 54-56 can be optical switches. A first switch 54, furthest from the retainer 9, can be an emergency stop switch. A second switch 55, in Fig. 4 the middle switch, can be a maximum displacement switch. A third switch 56, in the embodiment shown closest to the retainer 9, can be a start position switch. The switches 54-56 can be coupled to the electrical circuit 53, especially to the controller 19. The position of at least one of the switches 54-56 relative to the body 8 and/or to at least one of the other switches 54-56 can be a adjustable, in order to set their point of actuation. In an embodiment two or all of the switches 54-56 can be displaced relative to the body 8 and/or to each other.

### Industrial Applicability

A welding tool 4 and welding apparatus 1 can be used for welding objects 13 such as but not limited to links or other elements to a surface 45, such as but not limited to product surfaces, frames, constructional elements and other elements. The welding can be resistance welding and can be performed without adding materials.

In an embodiment an element 13 to be welded to a surface 45 can be picked up by the retaining surface 12 of the retainer 9 by bringing the retaining surface 12 close to, for example above the element 13, by moving the welding tool 4 or at least the body 8 towards the element 13. To that end the shoe 5 can be moved along the guiding surface 3. In an alternative embodiment an element 13 can be lifted to the retaining surface 12, for example manually or by a robot, a feeding carrousel or other feeding tools. If the welding apparatus 1 comprises a robot 2 having multiple degrees of freedom, such as but not limited to four, five or six degrees of freedom, the welding tool 4 can be moved towards an element 13 to be picked up, such that such element 13 can be retained by the retainer 9. Then the element 13 can be moved towards a position above the surface 45.

The retainer 9 can be moved from a position shown in Fig. 1 upward, that is in the direction of the body 8 by activating the actuator 17 such as a solenoid 18. Therein the spring 30 is compressed, providing a force in the direction of the surface 45. The extreme end 51 of the element 13 can in this position be brought to a distance D₁ from the surface 45. Then in an embodiment the element 13 is moved against the surface 45, for example by deactivating the actuator 17 by the controller 19, such that the spring 30 can push the retainer 9 away from the body 8. The extreme end 51 of the element 13 is moved against the surface 45, forming a primary contact area 52 and is held in that position. The element 13 is retained by the or each magnet 36 in or at the contact surface 12, which supports the element 13. Then an electrical current is led from the power source 21 through the conductor 39, the retaining element 40, the contact surface 12, the element 13, especially the extreme end 51 thereof, the surface 45 and the conductor 47, forming an electrical circuit 53. The current is led through the primary contact area 52. Then the element 13 is retracted from the surface 45, forming an electrical arch between the end 51 and the surface 45, especially the contact area 52, thereby heating the material of the primary contact area 52 in at least one of the element 13 and the surface 45. The primary contact area 52 will melt at least partly in the element 13 and/or the surface 45. Then the end 51 can be forced back against the surface 45 by the tool 4, especially by the actuator 17, and held in that position. When the current is stopped by the controller 19 the melted material will set again, thereby fusing the material of the element 13 and of the surface 45 in the primary contact area 52. Thus the element 13 is welded to the surface 45.

Since the primary contact area 52 can form the main contact between the element 13 and the surface, most of the current will be passed through the primary contact area 52. This has the advantage that the heating of the element 13 and/or surface area 45 by the current, in the contact, area 52 can controlled securely, leading to optimal welding. In an embodiment the extreme end forms the only contact area 52 with the surface 45, even further optimizing the welding.

After welding the element 13 to the surface 45 the retainer 9 can be withdrawn from the element 13 by energizing the actuator 17, such as a solenoid 18, thereby pulling the retainer 9 towards the body 8. The magnet(s) 36 will be forced away from the element 13. The welding tool 4 is thus again ready for a following element 13 to be welded.

In an embodiment wherein the magnet(s) 36 is/are electrically operated, the element 13 can be released from the retainer 12 by deactivating the magnet(s) 36. It can be picked up by the retainer 9 by holding the contact surface 12 slightly above or against the element 13 and energizing the, a or each magnet 36.

In an embodiment the welding process can be performed by first moving the extreme end 51 of the element 13 against the surface 45 by deactivating the actuator 17, as described above. Then the current is led through the element 13 and the surface 45, through the primary contact area 52. Once the electrical contact is made, the retainer 9 is withdrawn slightly, relative to the surface 45, such that a short distance is obtained between the extreme end 51 of the element 13 and the surface 45. An electrical arch is obtained between the element 13 and the surface 45. Thus at least part of at least one of the extreme end 51 of the element 13 and the surface area 52 below it will melt at least partly by the resistive heat generated. Then the actuator 17 is deactivated again, such that the spring 30 will be released and the element 13 will be forced against the surface 45 again, thereby fusing the element 13 with the surface 45 in the primary contact area 52. In an embodiment the welding tool 4 can be moved for pressing the element 13 against the surface 45, instead of or in addition to moving the retainer 9 by the actuator 17. In another embodiment the actuator 17 and spring can be configured to push the retainer towards the surface 45 when activated, whereas the retainer 9 will be force back into the direction of the body 8, by the spring 30, when the actuator is deactivated. In still another embodiment the actuator 17 is designed and configured to move the retainer 9 in two opposite directions, controlled by the controller 19.

When the retainer 9 is moved away from the body 8, in the direction s, the upper end 58 of the shaft 38 may pass to the third switch 56, indicating that the tool 4 is ready for use. When the retainer is retracted towards the body 8, the end 58 may encounter and actuate the second switch 55. This position can indicate the maximum work displacement, indicating proper lifting of the retainer 9. If the retainer 9 is moved further towards the body 8, the end 58 may actuate the first switch 54, which can deactivate the apparatus 1 and/or the tool 4. This can for example be an indication of a too high pressure of the object 13 to the surface 45 or of failure to stop movement of the retainer 9 towards the body 8.

In an embodiment the elements 13 such as links can be welded to the surface 45 with the welding tool 4 or welding apparatus 1 temporarily, followed by further welding the elements 13 to the surface 45 by using other welding techniques, such as but not limited to electric welding using material adding electrodes, autogenic welding or other suitable welding techniques.

Although the embodiments disclosed and discussed with reference to the drawings have been given as examples of a tool, method and apparatus according to the disclosure, many variants are possible within the scope of the claims, including any combination of one or more features of the embodiments shown and discussed, which are also considered to have been disclosed herein.

## Claims

1. Welding tool, comprising:
a retainer; and
a conductor connected to the retainer;
wherein the retainer comprises a magnet for retaining an object to be welded.

2. Welding tool according to claim 1, wherein the retainer comprises a contact surface for the object to be welded, wherein said magnet is provided in or near said contact surface.

3. Welding tool according to claim 2, wherein the contact surface is at least partly hooked, curved or angled.

4. Welding tool according to claim 2 or 3, further including a body, wherein the contact surface is facing away from the body.

5. Welding tool according to any one of the preceding claims, wherein the conductor is connected to at least one electrically conductive element in or near a contact surface of the retainer.

6. Welding tool according to any one of the preceding claims, wherein the conductor comprises an earth link connected to a conductive surface.

7. Welding tool according to any one of the preceding claims, wherein the welding tool comprises an actuator, connected to the retainer, for moving of the retainer relative to a body of the welding tool.

8. Welding tool according to claim 7, wherein at least one linear guide is provided for guiding the retainer relative to the body.

9. Welding tool according to claim 7 or 8, wherein the actuator comprises an electrical actuator.

10. Welding tool according to claim 9, wherein the actuator comprises a solenoid.

11. Welding tool according to any one of the preceding claims, wherein at least the retainer is at least partly made of non-magnetic material.

12. Welding tool according to any one of the preceding claims, wherein at least the retainer is made at least partly of a non metallic material.

13. Welding tool according to any one of the preceding claims, wherein the retainer is at least partly made of plastic.

14. Welding tool according to any one of the preceding claims, wherein the welding tool is provided with connecting means for connecting the welding tool to a robot.

15. Method for welding, comprising the steps of:
retaining to a magnet of a welding tool an element to be welded to a surface;
bringing the element to be welded into contact with the surface with at least a primary contact area;
directing an electrical current through the element and the surface, passing through at least the primary contact area;
melting at least a portion of at least one of the primary contact area and the surface;
forcing at least the primary contact area against the surface for joining them; and
withdrawing the magnet from the element.

16. Method according to claim 15, further including:
picking up the element with the magnet.

17. Method according to claim 15 or 16, further including:
energizing the magnet for retaining the element to be welded and de-energizing the magnet for withdrawing the magnet from the element.

18. Welding apparatus, comprising:
a robot; and
a welding tool,
wherein the welding tool comprises:
a body, connected to the robot; and
a holding device;
the holding device comprising a magnet.

19. Welding apparatus according to claim 18, further including:
a contact element;
a electrical conducter;
an electrical energy source;
a welding surface; and
an element to be welded to the welding surface;
wherein the conductor, the electrical energy source and the contact element form an electrical short circuit over the element to be welded, connected to the magnet, held against the welding surface connected to the contact element.

20. Welding apparatus according to claim 18 or 19, further including:
an actuator for moving the retainer relative to the body.

21. Welding tool, preferably according to any one of claims 1-14, comprising:
a conductor; and
a retainer; the retainer including:
a contact surface for retaining an object to be welded; and
a retainer body near the contact surface, wherein:
the retainer body is at least partly made of non-ferro and non-copper material.

22. Welding tool according to claim 21, wherein the retainer body is at least partly made of a non-metallic material, preferably plastic.
